# EUROPÄISCHE PATENTANMELDUNG

(11) **EP 2 055 919 A2**
(43) Veröffentlichungstag der Anmeldung: **06.05.2009**
(21) Anmeldenummer: 08017618.3
(22) Anmeldetag: 08.10.2008
(51) Int. Cl.: F02D 41/40, F02D 41/10, F02D 41/12, F02D 21/08

(54) **Verfahren zum Betreiben einer Brennkraftmaschine**

(30) Priorität: 05.11.2007 DE 102007052615
(71) Anmelder: VOLKSWAGEN AG, 38436 Wolfsburg (DE)
(72) Erfinder: Groenendijk, Axel, 38518 Gifhorn (DE); Scher, Uwe, 38162 Cremlingen/Destedt (DE); Aberle, Werner, 38542 Leiferde (DE)

(57) **Zusammenfassung**

Die Erfindung betrifft ein Verfahren zum Betreiben einer Brennkraftmaschine, insbesondere Dieselmotor, insbesondere eines Kraftfahrzeugs, wobei Kraftstoff in einen Brennraum der Brennkraftmaschine direkt eingespritzt wird, wobei während eines Arbeitsspiels ein Teil des Kraftstoffes als eine Voreinspritzung und der restliche Kraftstoff als eine Haupteinspritzung zu einem späteren Zeitpunkt in den Brennraum eingespritzt wird. Hierbei erfolgt bei einem Lastwechsel der Brennkraftmaschine vorübergehend wenigstens eine Voreinspritzung von Kraftstoff und eine Haupteinspritzung von Kraftstoff derart, dass eine sich aufgrund der wenigstens einen Voreinspritzung ergebende Verbrennung im Brennraum abgeschlossen ist, bevor die Haupteinspritzung erfolgt.

## Beschreibung

Die Erfindung betrifft ein Verfahren zum Betreiben einer Brennkraftmaschine, insbesondere Dieselmotor, insbesondere eines Kraftfahrzeugs, wobei Kraftstoff in einen Brennraum der Brennkraftmaschine direkt eingespritzt wird, wobei während eines Arbeitsspiels ein Teil des Kraftstoffes als eine Voreinspritzung und der restliche Kraftstoff als eine Haupteinspritzung zu einem späteren Zeitpunkt in den Brennraum eingespritzt wird, gemäß dem Oberbegriff des Patentanspruchs 1.

Bei den zur Erfüllung der schärfsten Abgasnormen für Dieselmotoren notwendigen sehr hohen Abgasrückführraten wird zunehmend die Regelgüte im transienten Motorbetrieb entscheidend für die verbleibenden Abgasemissionen (Ruß und NOₓ). Bei der beim Dieselmotor allgemein verwendeten externen Abgasrückführung (AGR) unterliegt das System einer laufzeitenbedingten Trägheit, die bei einer Lastzunahme (zu hohe AGR-Rate) zu Russspitzen und bei einer Lastabnahme (zu geringe EGR-Rate) zu NOₓ-Spitzen führt.

Für eine schnelle Korrektur der AGR-Rate und zum Temperaturmanagement bzw. Aufwärmen der Zylinderladung zur Vermeidung von erhöhten CO- und HC-Emissionen bei Schwachlast sind verschiedene Möglichkeiten der inneren AGR über variable Ventiltriebe bekannt. Die Dosierung über die Gaswechselventile erlaubt hierbei eine zyklusgenaue Regelung der AGR-Masse im Brennraum. Diese Systeme bedeuten allerdings üblicherweise einen erheblichen konstruktiven Mehraufwand.

Aus der EP 1 496 234 B1 ist es bekannt, die AGR-Rate für verschiedene Verbrennungsmodi zu bestimmen und eine externe AGR entsprechend einzustellen. Einer der Verbrennungsmodi beinhaltet dabei eine geteilte, verzögerte Verbrennung. Hiermit kann jedoch nicht schnell genug auf eine Änderung der notwendigen AGR-Rate bei einem Lastwechsel reagiert werden.

Aus der DE 103 44 423 A1 ist ein Verfahren bekannt, bei dem mittels einer Einspritzdüse Kraftstoff direkt in einen Brennraum eingespritzt wird, wobei während eines Arbeitsspiels ein Teil des Kraftstoffes als eine Voreinspritzung und der restliche Kraftstoff als eine Haupteinspritzung zu einem späteren Zeitpunkt in den Brennraum eingespritzt wird. Mit der Voreinspritzung wird ein homogenes Vorgemisch gebildet, mit dem eine homogene Verbrennungsphase in Form einer Niedrigtemperaturphase und einer Hochtemperaturphase eingeleitet wird. Die Haupteinspritzung wird derart vorgenommen, dass deren Selbstzündung während der Hochtemperaturphase der Voreinspritzung stattfindet. Der Einspritzzeitpunkt der Haupteinspritzung wird so gewählt bzw. eingestellt, dass die Zündung der Haupteinspritzung nach dem Beginn vorzugsweise vor dem Ende der Hochtemperaturphase stattfindet.

Der Erfindung liegt die Aufgabe zugrunde, ein Verfahren der o.g. Art hinsichtlich des Schadstoffausstoßes bei Lastwechseln zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass bei einem Lastwechsel der Brennkraftmaschine vorübergehend wenigstens eine Voreinspritzung von Kraftstoff und eine Haupteinspritzung von Kraftstoff derart erfolgt, dass eine sich aufgrund der wenigstens einen Voreinspritzung ergebende Verbrennung im Brennraum abgeschlossen ist, bevor die Haupteinspritzung erfolgt.

Dies hat den Vorteil, dass die Voreinspritzung und Vorverbrennung eine extrem schnelle Art der Abgasrückführung unabhängig von der konventionellen internen oder externen AGR zur Verfügung stellt, so dass bei der Steuerung der Verbrennung im Brennraum wesentlich schneller auf Lastwechsel reagiert werden kann, als dies mit konventioneller interner oder externer AGR möglich wäre, und dadurch Schadstoffe im Abgas gemindert werden können. Zusätzlich kann eine bei der Hauptverbrennung vorhandene Menge an Inertgas und Sauerstoff sehr genau mittels der abgeschlossenen Vorverbrennung eingestellt werden.

Beispielsweise erfolgt die wenigstens eine Voreinspritzung von Kraftstoff 80°KW bis 120°KW, insbesondere 100°KW, vor dem oberen Totpunkt (OT) im Kompressionshub.

Eine schnelle Umsetzung der bei der Haupteinspritzung eingespritzten Kraftstoffmenge wird dadurch erzielt, dass zusätzlich eine Voreinspritzung von Kraftstoff derart erfolgt, dass eine sich aufgrund dieser zusätzlichen Voreinspritzung ergebende Verbrennung im Brennraum zeitlich bis über den Einspritzzeitpunkt der Haupteinspritzung hinaus andauert.

Die Erfindung wird im Folgenden anhand der Zeichnung näher erläutert. Diese zeigt in
- Fig. 1: eine graphische Darstellung einer Brennrate über einen Kurbelwinkel und
- Fig. 2: eine graphische Darstellung einer Einspritzrate über einen Kurbelwinkel

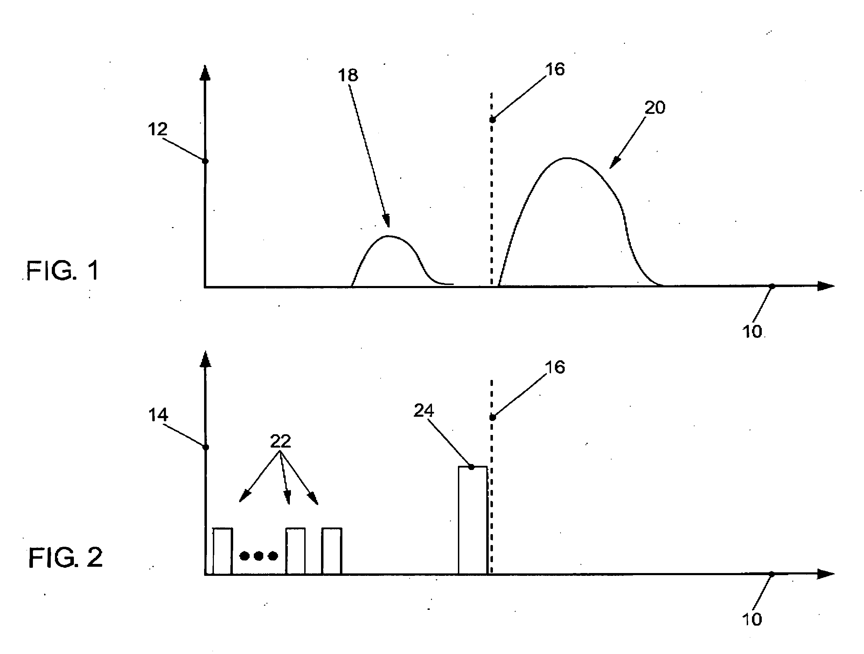

In den Fig. 1 und 2 ist auf einer horizontalen Achse 10 ein Kurbelwinkel, auf einer ersten vertikalen Achse 12 eine Brennrate und auf einer zweiten vertikalen Achse 14 eine Einspritzrate aufgetragen. Mit 16 ist auf der horizontalen Achse 10 ein oberer Totpunkt (OT) im Kompressionshub eines Kolbens einer Hubkolben-Brennkraftmaschine gekennzeichnet. Die Fig. 1 und 2 sind derart übereinander dargestellt, dass die Kurbelwinkel übereinstimmen.

Ein erster Graph 18 veranschaulicht in Fig. 1 eine Brennrate 12 in einem Brennraum eines Arbeitszylinder der Brennkraftmaschine während eines Arbeitsspiels über den Kurbelwinkel 10 für eine Vorverbrennung. Ein zweiter Graph 20 veranschaulicht in Fig. 1 eine Brennrate 12 in dem Brennraum des Arbeitszylinder der Brennkraftmaschine während eines Arbeitsspiels über den Kurbelwinkel 10 für eine Hauptverbrennung.

In Fig. 2 kennzeichnet Bezugszeichen 22 Zeitpunkte für Beginn und Ende, Raten und Zeitspannen für mehrere Voreinspritzungen, die zu der Vorverbrennung gemäß Fig. 1 führen. Weiterhin ist in Fig. 2 bei 25 Zeitpunkt für Beginn und Ende, Rate und Zeitdauer für eine Haupteinspritzung dargestellt, die zu der Hauptverbrennung gemäß Fig. 1 führt. Wie unmittelbar ersichtlich, endet die Vorverbrennung 18 bevor die Haupteinspritzung 24 stattfindet.

Der Kern der Erfindung liegt in einem Verfahren, die externe (gekühlte) Abgasrückführung hinsichtlich resultierender Zusammensetzung der Zylinderladung (z.B. CO₂, H₂O, O₂-Gehalt) für die Hauptverbrennung 20 mittels einer der eigentlichen Verbrennung 20 vorgelagerten, abgesetzten schadstoffarmen homogenen Vorverbrennung 18 über Voreinspritzung(en) 22 zyklusgenau einzustellen. Hierzu kommt eine sehr frühe (ab ca. 100°KW v. OT 16) Gemischbildung mit mindestens einer Voreinspritzung 22 zum Einsatz. Die resultierende frühe Verbrennung 18 reduziert den verbleibenden Sauerstoffgehalt im Brennraum für die Hauptumsetzung bzw. Hauptverbrennung 20. Gleichzeitig wird der Inertgasanteil (hauptsächlich CO₂ und H₂0) erhöht. Diese Vorverbrennung 18 wirkt also wie eine Abgasrückführung auf die Hauptumsatzphase. Um einen mit der frühen Schwerpunktlage der Vorverbrennung 18 verbundenen Wirkungsgradabfall der Brennkraftmaschine möglichst gering zu halten, wird die beschriebene Korrekturmenge nur im instationären Fall des Betriebs der Brennkraftmaschine, d.h. bei schnellen Lastwechseln, kurzeitig ein- oder ausgeblendet.

Es handelt sich bei der vorliegenden Erfindung nicht um die Darstellung eines homogenisierten Brennverfahrens in einem erweiterten Lastbereich (cool flame / hot flame), sondern um eine Optimierung des transienten Motorbetriebs durch Unterstützung der trägen externen EG R durch schnell schaltbares zylinderintern erzeugtes Inertgas. Mit anderen Worten wird neben der konventionellen externen und internen AGR eine dritte Art der Abgasrückführung eingeführt, nämlich eine zylinderinterne AGR durch Vorverbrennung. Die angestrebte Vorverbrennung 18 zum Erzeugen von Inertgas und Reduzieren des Sauerstoffgehaltes erfolgt abgesetzt von der nachfolgenden Hauptverbrennung 20.

Die Aufteilung Grund-AGR-Rate / schaltbarer AGR-Anteil erfolgt bei der vorliegenden Erfindung durch Aufteilung auf externe AGR und schnelle interne Inertgaserzeugung mit Sauerstoffreduktion mittels der Voreinspritzung 22 und Vorverbrennung 18. Wesentlich ist für den Betrieb der Brennkraftmaschine, dass diese Voreinspritzung 22 und Vorverbrennung 18 zur schnellen internen Inertgaserzeugung und Sauerstoffreduktion nur kurzzeitig bzw. temporär bei sehr schnellen Lastwechseln im instationären Betrieb der Brennkraftmaschine erfolgt und möglichst schnell wieder beendet wird.

## Patentansprüche

1. Verfahren zum Betreiben einer Brennkraftmaschine, insbesondere Dieselmotor, insbesondere eines Kraftfahrzeugs, wobei Kraftstoff in einen Brennraum der Brennkraftmaschine direkt eingespritzt wird, wobei während eines Arbeitsspiels ein Teil des Kraftstoffes als eine Voreinspritzung und der restliche Kraftstoff als eine Haupteinspritzung zu einem späteren Zeitpunkt in den Brennraum eingespritzt wird, **dadurch gekennzeichnet, dass** bei einem Lastwechsel der Brennkraftmaschine vorübergehend wenigstens eine Voreinspritzung von Kraftstoff und eine Haupteinspritzung von Kraftstoff innerhalb eines Arbeitsspiels derart erfolgt, dass eine sich aufgrund der wenigstens einen Voreinspritzung ergebende Verbrennung im Brennraum abgeschlossen ist, bevor die Haupteinspritzung erfolgt.

2. Verfahren nach Anspruch 1, **dadurch gekennzeichnet, dass** die wenigstens eine Voreinspritzung von Kraftstoff 80°KW bis 120°KW, insbesondere 100°KW, vor dem oberen Totpunkt (OT) im Kompressionshub erfolgt.

3. Verfahren nach wenigstens einem der vorhergehenden Ansprüche, **dadurch gekennzeichnet, dass** zusätzlich eine Voreinspritzung von Kraftstoff derart erfolgt, dass eine sich aufgrund dieser zusätzlichen Voreinspritzung ergebende Verbrennung im Brennraum zeitlich bis über den Einspritzzeitpunkt der Haupteinspritzung hinaus andauert.
